# FASCICULE DE BREVET EUROPEEN

(11) **EP 0 568 425 B1**
(45) Date de publication et mention de la délivrance du brevet: **23.06.1999**
(21) Numéro de dépôt: 93401057.0
(22) Date de dépôt: 23.04.1993
(51) Int. Cl.: C08G 18/10, C08G 18/12, C08G 18/48, C09J 175/08

(54) **Compositions adhésives à base de prépolymères polyuréthanes applicables à chaud et leur procédé d'obtention**
Auf "hot melt" Polyurethan-Prepolymeren basierende Klebstoffzusammensetzungen und ihre Herstellung
Adhesive compositions based on hot melt polyurethane prepolymers and their preparation

(30) Priorité: 28.04.1992 FR 9205235
(43) Date de publication de la demande: 03.11.1993
(73) Titulaire: Ato Findley S.A., 92800 Puteaux (FR)
(72) Inventeur: Miskovic, Michel, F-60200 Compiegne (FR)
(74) Mandataire: Haicour, Philippe

(56) Documents cités:
- EP-A- 0 238 992
- EP-A- 0 383 505
- EP-A- 0 436 347
- US-A- 3 839 491
- CHEMICAL ABSTRACTS, vol. 109, no. 6, Août 1988, Columbus, Ohio, US; abstract no. 38900a, MURAMATSU ET AL 'MOISTURE CURABLE URETHANE RESIN COMPOSITIONS' page 47 ;colonne 1 ;

## Description

La présente invention se rapporte à des adhésifs applicables à chaud perfectionnés du type polyuréthane.

La chimie moderne a développé de nombreuses formulations à base de polymères thermoplastiques synthétiques susceptibles de constituer la base de adhésifs synthétiques applicables à chaud, notamment les polyuréthanes, polymères résultant de la polyaddition des polyisocyanates sur des polyols. Les thermoadhésifs, de par les caractéristiques qui président à leur mode de mise en oeuvre, sont toutefois sensibles à la chaleur, et leur domaine d'utilisation est celui des joints collés qui ne sont pas exposés longtemps à des températures supérieures à environ 60°C, températures au-dessus desquelles l'adhésif perd sa ténacité et les collages se déforment et se détruisent par fluage. On a partiellement remédié au fluage à température modérée en formulant le thermoadhésif avec un polyuréthane comportant un certain nombre de fonctions isocyanates libres. Ces compositions, après mise en oeuvre, évoluent par réaction avec l'humidité ambiante et réticulation partielle subséquente. C'est à cette catégorie de thermoadhésifs polyuréthanes, dont le principe se retrouve déjà dans les brevets FR 1 516 602 (Schnectady), et US 3 839 491 (Gamero et al.) qu'appartiennent les compositions de la présente invention. Ces polyuréthanes à excès d'isocyanate sont dénommés prépolymères pour rappeler qu'ils sont susceptibles d'évolution vers des produits à plus forte masse moléculaire.

Les thermoadhésifs polyuréthanes connus de l'art antérieur sont habituellement constitués d'une résine synthétique thermoplastique, généralement un copolymère d'éthylène et d'acétate de vinyle ou de polyamides, d'un prépolymère polyuréthane résultant de la polyaddition d'un diisocyanate et de polyesters-diols ou de mélange de polyesters-diols et de polyéthers-diols, de plastifiants pour en améliorer la souplesse aux moyennes et basses températures et, le cas échéant, de résines dispensatrices de pouvoir collant instantané (résines tackifiantes). De tels thermoadhésifs sont par example décrits dans les brevets européens EP 293602, EP 289945 EP 107097 et EP 436 347 Ils présentent un certain nombre d'inconvénients, dont notamment un comportement à la chaleur inégal, avec une trop grande fragilité à basse température et une médiocre résistance à l'humidité.

La demanderesse a maintenant trouvé qu'il était possible de préparer des thermoadhésifs qui ne souffrent pas des inconvénients ci-dessus et qui, de plus, sont composés très simplement du seul produit de polyaddition en plusieurs étapes de polyisocyanates et de polyéthers-polyols. Ces thermoadhésifs ne comportent ni résine collante (tackifiante), ni base polymère thermoplastique, ni même de plastifiant. Pour parvenir à ce résultat, la demanderesse met en oeuvre, et c'est en cela que réside principalement l'invention, la polyaddition de polyéthers-diols avec des polyisocyanates qui sont, non pas les polyisocyanates courts selon l'art antérieur, mais des polyisocyanates plus complexes, eux-mêmes obtenus par polyaddition des polyisocyanates courts habituels aux mélanges de diols et triois de relativement faibles masses moléculaires. Pour bien comprendre l'invention, il importe de distinguer les divers polyols qui y sont mis en oeuvre, car ce sont tous des polyéthers-polyols.

Les polyéthers-polyols utilisés pour constituer le polyisocyanate complexe sont des polyéthers-polyols aliphatiques de faibles masses moléculaires moyenne d'environ 400 à 450, et dont la fonctionnalité est dans la fourchette 2-3. En pratique, ce sont des mélanges de polyéthers-triols et de polyéthers-diols dans lesquels le rapport pondéral des polyéthers-triols à l'ensemble des polyethers-polyols est compris entre 10 et 100%. Les polyéthers-triols utiles sont des dérivés oxyalkylés de triols tels que le triméthylolpropane, l'hexane-1,2,6-triol ou la glycérine. On préfère les glycérines oxypropylées, de masses moléculaires comprises entre 200 et 900. Les polyéthers-diols utiles pour la réalisation des réactifs polyisocyanates complexes de l'invention sont des dérivés oxyalkylés de diols, et particulièrement les polypropylène-glycols. On préfère ici les polypropylène-glycols de masses moléculaires comprises entre 200 et 900. Ces polyisocyanates complexes sont préparés de façon extemporanée. Dès que la réaction par laquelle on les obtient est terminée, (on suit son degré d'avancement par dosage du pourcentage de NCO libres), ils sont combinés avec les polyéthers-diols pour réaliser le prépolymère qui constitue l'adhésif prêt à l'emploi.

Les polyéthers-diols utilisables à ce stade de la préparation des prépolymères polyuréthanes selon l'invention sont des polyéthers-diols aliphatiques de masses moléculaires comprises entre environ 3000 et 6000, de fonctionnalité hydroxyle strictement égale à deux (cette fonctionnalité hydroxyle est le nombre d'hydroxyles disponibles par molécule; on la détermine à partir de l'indice d'hydroxyle I_{OH} et de la masse moléculaire). Ce sont de préférence, soit des polymères d'oxyde de propylène, soit des copolymères séquencés d'oxyde d'éthylène et d'oxyde de propylène, de préférence à terminaisons oxyde d'éthylène, liquides à température ambiante. On peut les utiliser conjointement avec des polyéthers-diols de faibles masses moléculaires comprises entre 200 et 900 qui constituent probablement au sein de la structure du prépolymère et du polymère final des segments moléculaires rigides et dont le rôle est d'équilibrer la souplesse des segments correspondant aux polyéthers-diols de fortes masses moléculaires. Ce sont par exemple des homopolymères d'oxyde de propylène, également de fonctionnalité hydroxyle strictement égale à 2.

Les polyisocyanates que l'on utilise dans l'invention sont des polyisocyanates aliphatiques ou aromatiques bien connus de l'homme du métier. On préfère les diisocyanates, et particulièrement le diphénylméthane diisocyanate (MDI).

Faute de pouvoir élucider totalement la structure des thermoadhésifs selon l'invention, on les définit ici comme étant le résultat de leur procédé d'obtention tel que décrit ci-après et qui comprend les étapes suivantes :
a) préparation d'un polyisocyanate par polyaddition à partir d'un diisocyanate et d'un mélange de polyéthers-diols et de polyéthers-triols de faibles masses moléculaires comprises entre 200 et 900, le rapport pondéral des polyéthers-triols par rapport à l'ensemble des polyéthers-polyols devant se situer entre 10 et 100%, préférentiellement entre 15 et 35%;
b) préparation du prépolymère polyuréthane à partir du polyisocyanate obtenu précédemment et d'un mélange de polyéthers-diols comportant de 20 à 100%, préférentiellement de 40 à 60%, de polyols de fortes masses moléculaires comprises entre 3000 et 6000, le complément étant le cas échéant constitué de polyéthers-diols de faibles masses moléculaires comprises entre 200 et 900.

Pour la préparation du polyisocyanate intermédiaire, la charge réactive de diisocyanate et de polyols est calculée de telle façon qu'au cours de la polyaddition qui se déroule au cours de l'étape a), seule une partie des fonctions isocyanates introduites avec le diisocyanate soit engagée dans des liaisons uréthanes, et qu'il reste de 60 à 90% des fonctions isocyanates libres. Pour la préparation du prépolymère tel que résultant de l'étape b), la charge de diols est calculée de telle façon qu'après polyaddition, il reste encore environ de 1 à 5% de fonctions isocyanates libres. La conduite de ces réactions se fait d'une façon tout-à-fait classique, bien connue de l'homme du métier, ainsi qu'il apparaîtra dans les exemples donnés plus bas.

Les thermoadhésifs selon l'invention sont caractérisés par un temps ouvert très long (on rappelle que le temps ouvert d'un adhésif est le temps dont on dispose pour positionner ou repositionner un assemblage après mise en place de l'adhésif). lls ne comportent aucun autre polymère thermofusible, plastifiant, ou résine tackifiante habituellement rencontrés dans la formulation des thermoadhésifs polyuréthanes. La tenue à chaud (températures comprises entre environ 80 et 120°C) du collage définitif, c'est-à-dire après post-réticulation spontanée par action de l'humidité ambiante sur les fonctions isocyanate restées libres, est excellente; sa souplesse se conserve dans le temps du fait de l'absence de plastifiant sujet à la migration.

Du fait de leur temps ouvert très longs (qui peuvent atteindre 60 minutes), de leur souplesse et de résistance au vieillissement, les adhésifs selon l'invention sont avantageusement utilisés pour la confection des panneaux de grande surface (3 mètres carrés et plus), fabriqués par contre-collage.

### EXEMPLES

### Exemple 1

Dans un réacteur sous atmosphère d'azote, on commence par introduire 38 parties en poids de diphénylméthane diisocyanate, puis 2 parties d'un polyéther-triol de type glycérine polyoxypropylée, de masse moléculaire d'environ 450 et de fonctionnalité hydroxyle égale à 3, (Voranol CP 455 - Dow Chemicals) avec 7 parties de polyéther-diol de type polymère d'oxyde de propylène, de masse moléculaire d'environ 400 et de fonctionnalité hydroxyle égale à 2, (Voranol P 400 - Dow Chemicals). La masse est portée à 70°C, et après achèvement de la réaction, on introduit successivement 24 parties d'un polyéther-diol de type copolymère d'oxyde d'éthylène et d'oxyde de propylène, de masse moléculaire d'environ 3.800 et de fonctionnalité hydroxyle égale à 2, (Voranol EP 1900 - Dow Chemicals), et 29 parties d'un polyéther-diol de type polymère d'oxyde de propylène, de masse moléculaire 400 et de fonctionnalité hydroxyle égale à 2. La valeur du taux d'isocyanate visée est de 4,5, et son atteinte détermine la fin de la réaction. (Pour la détermination du taux d'isocyanate, voir norme AFNOR T 52-132.)

Le prépolymère obtenu est un solide à température ambiante, d'aspect translucide, légèrement jaune. Le produit fondu à à 100°C offre le même aspect; c'est un liquide doué d'un fort pouvoir collant; sa viscosité Brookfield est de 2.500-10.000 mPa.s. On le caractérise en outre par son temps ouvert limite (dit temps ouvert), défini selon la norme NF T 76-001 comme la durée écoulée entre l'application de l'adhésif ou sa réactivation et l'assemblage des substrats encollés, au-delà il devient impossible de réaliser l'assemblage. [La mesure du temps ouvert s'opère en déposant à environ 115°C sur un support de carton, un trait d'adhésif thermofusible d'environ 1,5 mm de largeur. On laisse refroidir à la température ambiante jusqu'à ce que l'on observe plus un bon collage sur un second support de carton contre-collé. Le temps maximum disponible pour réussir un bon collage (arrachement par défibrement du carton) est le temps ouvert.]

Les caractéristiques mécaniques définitives des compositions adhésives s'évaluent par essais de traction à la vitesse de 300mm/min, d'éprouvettes haltères H2 réalisées en film de 300 µm d'épaisseur, après réticulation par l'humidité de l'air (à 23°C et 65% d'humidité relative, exposition généralement de 7 jours). On mesure l'allongement à la rupture (A, exprimé en %) et la résistance à la rupture (R, exprimé en MPa). On mesure en outre une tenue thermique par essais de traction-cisaillement à 100°C sur éprouvettes de bois de chêne, dont la surface de collage est de 2,5 cm², I'épaisseur du joint de collage étant de 0,2 mm.

Les résultats relatifs au prépolymère de l'exemple sont reproduits sur le tableau ci-après, où le prépolymère est désigné par PP1. L'utilisation de ce prépolymère comme thermoadhésif se suffit à elle-même. On peut s'en rendre compte en considérant les résultats que l'on obtient en le formulant, selon les pratiques courantes en la matière, avec une résine tackifiante cétonique (respectivement 5% et 17% de résine ou avec une résine thermoplastique (1 partie de prépolymère pour 1 partie d'EVA, respectivement OREVAC 33/400 et EVATANE 28/800).

| **Produit** | **Aspect** | **Temps ouvert (minutes)** | **A %** | **R % (MPa)** | **Tenue thermique (MPa)** |
|---|---|---|---|---|---|
| PP1 | Transparent | 30-40 | 496 ± 1 | 24,9 ± 0,1 | 0,35 ± 0,1 |
| PP1 5 % tackif. | Transparent | 20-30 | 467 ± 8 | 19,3 ± 0,4 | 0,46 ± 0,04 |
| PP1 17 % tackif. | Transparent | 20-30 | 422 ± 35 | 22,1 ± 1,5 | 0,12 ± 0,02 |
| PP1 + EVA 33/400 | Blanchâtre | 15-20 | 425 ± 14 | 18,2 ± 2,9 | 0,32 ± 0,1 |
| PP1 + EVA 28/800 | Blanchâtre | 15-20 | 445 ± 32 | 29,1 ± 3,3 | 0,46 ± 0,05 |

### Exemple 2

On compare le prépolymère selon l'exemple 1 précédent à un prépolymère selon l'art antérieur (Fuller: EP 0 107 097), obtenu par réaction de MDI sur un mélange de 0,8 mole d'hexanediol 1-6 et de 1 mole de polypropylène-glycol de PM 2000, avec même taux de NCO que le prépolymère PP1 de l'exemple 1.

Les résultats sont consignés sur le tableau ci-après montrent la substantielle amélioration de la ténacité du produit selon l'invention avec conservation d'un allongement à la rupture très acceptable.

| **Produit** | **Aspect** | **Temps ouvert** | **A %** | **R %** | **Tenue thermique** |
|---|---|---|---|---|---|
| PP1 | Transparent | 30-40 | 496 ± 1 | 24,9 ± 0,1 | 0,35 ± 0,1 |
| Prépolym. Art antérieur | Blanchâtre | > 6 heures | 1016 ± 130 | 4,36 ± 0,19 | 0,35 ± 0,05 |

### Exemple 3

Dans le but d'améliorer la résistance thermique de radhésif, on a ajouté au prépolymère PP1 de l'exemple 1 0,1% de dilaurate de dibutylétain (DBTL). On constate sur le tableau ci-après que le résultat visé est atteint, et que la valeur du temps ouvert reste acceptable.

| **Produit** | **Aspect** | **Temps ouvert** | **A %** | **R %** | **Tenue thermique** |
|---|---|---|---|---|---|
| PP1 | Transparent | 30-40 | 496 ± 1 | 24,9 ± 0,1 | 0,35 ± 0,1 |
| PP1 + DBTL | Transparent | 20-25 | 360 ± 22,7 | 13,6 ± 0,9 | 0,80 ± 0,03 |

## Revendications

1. Compositions adhésives applicables à chaud, exemptes de résine polymère thermoplastique, de plastifiant et de résine tackifiante, constituées d'un prépolymère polyuréthane résultant de la polyaddition d'un polyisocyanate et de polyéthers-diols aliphatiques de masses moléculaires comprises entre 3000 et 6000, caractérisées en ce que le polyisocyanate est le résultat d'une première addition d'un diisocyanate en excès et d'un mélange de polyéthers-triols et de polyéthers-diols de faibles masses moléculaires, respectivement comprises entre 200 et 900, ledit mélange étant défini par un rapport pondéral des polyéthers-triols par rapport à l'ensemble des polyéthers-polyols compris entre 10 et 100 %, et que ledit prépolymère présente un taux d'isocyanate libre compris entre 1 et 5 %.

2. Compositions selon la revendication 1, caractérisées en ce que les polyéthers-triols et les polyéthers-diols ont une masse moléculaire comprise entre 400 et 450.

3. Procédé pour l'obtention de compositions adhésives applicables à chaud constituées d'un prépolymère polyuréthane et exemptes de résine polymère thermoplastique, de plastifiant et de résine tackifiante, caractérisé en ce que l'on commence par introduire dans un large excès de diisocyanate un mélange de polyéthers-polyols de faibles masses moléculaires comprises entre 200 et 900 et de fonctionnalité hydroxyle moyenne supérieure à deux, ledit mélange étant défini par un rapport pondéral des polyéthers-triols par rapport à l'ensemble des polyétherspolyols compris entre 10 et 100 %, puis qu'on forme le prépolymère en poursuivant la polyaddition par introduction de polyéthers-diols de plus fortes masses moléculaires comprises entre 3000 et 6000, accessoirement complétés de polyéthers-diols de faibles masses moléculaires comprises entre 200 et 600, en quantités telles que le taux d'isocyanate final soit compris entre 1 et 5 %.

4. Procédé selon la revendication 3, caractérisé en ce que dans le polyisocyanate intermédiaire résultant de l'addition préalable entre le diisocyanate et le mélange de polyéthers-polyols de faibles masses moléculaires comprises entre 200 et 900, le pourcentage de fonctions isocyanates réactives par rapport à l'ensemble des fonctions isocyanates introduites par le diisocyanate est compris entre 60 et 90 %.

5. Procédé selon la revendication 3, caractérisé en ce que le rapport pondéral des polyéthers-triols par rapport à l'ensemble des polyéthers-polyols est compris entre 15 et 35%.

## Claims

1. Hot-melt adhesive compositions, containing no thermoplastic polymer resin, no plasticizer and no tackifying resin, consisting of a polyurethane prepolymer resulting from the polyaddition of a polyisocyanate and of aliphatic polyether-diols having molecular masses of between 3000 and 6000, characterized in that the polyisocyanate is the result of a first addition of a diisocyanate in excess and of a mixture of polyether-triols and of polyether-diols having low molecular masses, respectively between 200 and 900, the said mixture being defined by a weight ratio of the polyether-triols to all of the polyether-polyols of between 10 and 100% and in that the said prepolymer has a free isocyanate content of between 1 and 5%.

2. Compositions according to Claim 1, characterized in that the polyether-triols and the polyether-diols have a molecular mass of between 400 and 450.

3. Process for obtaining hot-melt adhesive compositions consisting of a polyurethane prepolymer and containing no thermoplastic polymer resin, no plasticizer and no tackifying resin, characterized in that it starts with the introduction, into a large excess of diisocyanate, of a mixture of polyether-polyols having low molecular masses of between 200 and 900 and an average hydroxyl functionality of greater than two, the said mixture being defined by a weight ratio of the polyether-triols to all of the polyether-polyols of between 10 and 100%, and then the prepolymer is formed by continuing the polyaddition by introducing polyether-diols having higher molecular masses of between 3000 and 6000, secondarily complemented with polyether-diols having low molecular masses of between 200 and 600, in quantities such that the final isocyanate content is between 1 and 5%.

4. Process according to Claim 3, characterized in that in the intermediate polyisocyanate resulting from the prior addition between the diisocyanate and the mixture of polyether-polyols having molecular masses of between 200 and 900, the percentage of reactive isocyanate functional groups with respect to all of the isocyanate functional groups introduced by the diisocyanate is between 60 and 90%.

5. Process according to Claim 3, characterized in that the weight ratio of the polyether-triols to all of the polyether-polyols is between 15 and 35%.

## Patentansprüche

1. Klebstoffzusammensetzungen, die warm auftragbar sind, frei von thermoplastischem Polymerharz, Weichmacher und klebrigmachendem Harz sind und aus einem Polyurethanprepolymer bestehen, das aus der Polyaddition eines Polyisocyanats und aliphatischen Polyetherdiolen mit Molekularmassen zwischen 3.000 und 6.000 resultiert, dadurch gekennzeichnet, daß das Polyisocyanat das Ergebnis einer ersten Addition eines Diisocyanats im Überschuß und einer Mischung aus Polyethertriolen und Polyetherdiolen geringer Molekularmassen zwischen jeweils 200 und 900 ist, wobei die Mischung durch ein Gewichtsverhältnis von Polyethertriolen in bezug auf die Gesamtheit von Polyetherpolyolen zwischen 10 und 100 % definiert ist, und daß das Prepolymer einen freien Isocyanatgehalt zwischen 1 und 5 % aufweist.

2. Zusammensetzungen nach Anspruch 1, dadurch gekennzeichnet, daß die Polyethertriole und die Polyetherdiole eine Molekularmasse zwischen 400 und 450 aufweisen.

3. Verfahren zur Herstellung von warm auftragbaren Klebstoffzusammensetzungen, die aus einem Polyurethanprepolymer bestehen und kein thermoplastisches Harz, keinen Weichmacher und kein klebrigmachendes Harz enthalten, dadurch gekennzeichnet, daß man mit der Zugabe einer Mischung aus Polyetherpolyolen geringer Molekularmassen zwischen 200 und 900 und einer mittleren Hydroxylfunktionalität, die größer als 2 ist, zu einem großen Überschuß Diisocyanat beginnt, wobei die Mischung definiert ist durch ein Gewichtsverhältnis der Polyethertriole in bezug auf die Gesamtheit der Polyetherpolyole zwischen 10 und 100 Gew.-%, man dann das Prepolymer bildet, indem man die Polyaddition durch Zugabe von Polyetherdiolen größerer Molekularmassen zwischen 3.000 und 6.000 durchführt, zusätzlich vervollständigt durch die Zugabe von Polyetherdiolen geringer Molekularmassen zwischen 200 und 600, und zwar in solchen Mengen, daß der Isocyanatendgehalt zwischen 1 % und 5 % liegt.

4. Verfahren nach Anspruch 3, dadurch gekennzeichnet, daß in dem aus der vorangehenden Addition des Diisocyanats und des Gemisches von Polyether-Polyolen geringer Molekularmassen zwischen 200 und 900 hervorgegangenen intermediären Polyisocyanat der Prozentsatz der reaktiven Isocyanatfunktionen, bezogen auf die Gesamtheit der mit dem Diisocyanat eingebrachten Isocyanatfunktionen zwischen 60 und 90 % liegt.

5. Verfahren nach Anspruch 3, dadurch gekennzeichnet, daß das Gewichtsverhältnis der Polyethertriole in bezug auf die Gesamtheit der Polyetherpolyole zwischen 15 und 35 % liegt.
